# FASCICULE DE BREVET EUROPEEN

(11) **EP 3 292 366 B1**
(45) Date de publication et mention de la délivrance du brevet: **08.07.2020**
(21) Numéro de dépôt: 16722131.6
(22) Date de dépôt: 04.05.2016
(51) Int. Cl.: B60K 11/04, F28F 19/00, B60R 19/52, F24D 19/06, F28D 1/053, F28D 21/00

(54) **DISPOSITIF DE PROTECTION POUR ÉCHANGEURS THERMIQUES.**
SCHUTZVORRICHTUNG FÜR WÄRMETAUSCHER
PROTECTIVE DEVICE FOR HEAT EXCHANGERS

(30) Priorité: 06.05.2015 FR 1554050
(43) Date de publication de la demande: 14.03.2018
(73) Titulaire: Valeo Systèmes Thermiques, 78320 Le Mesnil Saint Denis (FR)
(72) Inventeur: PEREIRA, Daniel, 78370 Plaisir (FR); NGUYEN, Dinh-Luyen, 78180 Montigny-le-bretonneux (FR); MICHEL, Patrice, 53360 Saint Sulpice (FR)
(74) Mandataire: Tran, Chi-Hai
(86) Numéro de dépôt international: PCT/EP2016/060082
(87) Numéro de publication internationale: WO 2016/177826

(56) Documents cités:
- EP-A1- 0 756 074
- US-A- 5 042 575
- US-B1- 6 810 950

## Description

L'invention concerne le domaine des dispositifs de protection pour échangeurs thermiques et plus particulièrement pour échangeurs thermiques placés en face avant d'un véhicule automobile. Le document US 5 042 575 A divulgue un dispositif de protection selon le préambule de la revendication 1.

Dans le domaine automobile, les échangeurs thermiques placés en face avant peuvent être victime de projection de débris ou pierres pouvant endommager ou même percer les tubes plats à l'intérieur desquels circule un fluide caloporteur.

Afin de protéger ces échangeurs thermiques, il est connu de placer au devant d'eux un dispositif de protection pouvant absorber ces chocs. Néanmoins la fixation de ces dispositifs de protection est généralement réalisée par des clips qu'il faut mettre en place individuellement et manuellement, ce qui est long et fastidieux et non compatible avec une production rapide en masse.

Ainsi, un des buts de l'invention est de remédier au moins partiellement aux inconvénients de l'art antérieur et de proposer un dispositif de protection à fixation amélioré.

La présente invention concerne donc un dispositif de protection pour échangeur thermique, ledit échangeur thermique comportant au moins une face avant et une face arrière en opposition l'une avec l'autre, ainsi qu'une première face latérale et une deuxième face latérale en opposition l'une avec l'autre, ledit dispositif de protection comportant une grille de protection et étant destiné à être placé en regard de la face avant dudit échangeur thermique, la grille de protection comportant sur deux extrémités opposées respectivement des premiers moyens de maintien et des deuxièmes moyens de maintien adaptés à chevaucher respectivement la première face latérale et la deuxième face latérale de l'échangeur thermique et à venir en prise avec la face arrière dudit échangeur thermique, le dispositif de protection comportant en outre des éléments séparateurs destinés à être placés entre la grille de protection et la face avant de l'échangeur thermique.

Les premier et deuxième moyen de maintien sont ainsi en opposition et permettent une fixation rapide du dispositif de protection sur la face avant de l'échangeur thermique sans qu'il soit nécessaire d'équiper ledit échangeur thermique avec des éléments particuliers pour la fixation.

Selon un aspect de l'invention, au moins les premiers moyens de maintien ou les deuxièmes moyens de maintien comportent au moins un crochet de fixation destinés à venir en prise avec la face arrière de l'échangeur thermique.

Selon un autre aspect de l'invention, au moins les premiers moyens de maintien ou les deuxièmes moyens de maintien comportent au moins une patte de fixation à emboîtage élastique contre la face arrière de l'échangeur thermique.

Selon un autre aspect de l'invention, la patte de fixation à emboîtage élastique comporte une lamelle flexible prenant racine sur la grille de protection et comportant à son extrémité libre une tête en biseau destinée à venir en prise avec la face arrière de l'échangeur thermique.

Selon un autre aspect de l'invention, la patte de fixation à emboîtage élastique comporte une lamelle flexible de forme générale en « J » comprenant deux branches de longueurs différentes reliées par un coude, la branche la plus longue prenant racine sur la grille de protection et l'extrémité libre de la branche la plus courte étant destinée à venir au contact de la face arrière de l'échangeur thermique.

Selon un autre aspect de l'invention, les premiers moyens de maintien et les deuxièmes moyens de maintien comportent tout deux au moins une patte de fixation à emboîtage élastique contre la face arrière de l'échangeur thermique.

Selon un autre aspect de l'invention, le dispositif de protection est réalisé en matière plastique.

La présente invention concerne également un ensemble d'échange de chaleur comportant un échangeur thermique et un dispositif de protection tel que précédemment décrit et placé sur ledit échangeur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un dispositif de protection monté sur un échangeur thermique,
- la figure 2 montre une représentation schématique en perspective d'un dispositif de protection selon un premier mode de réalisation,
- la figure 3 montre une représentation schématique en perspective du dispositif de protection de la figure 1 lors de sa mise en place sur un échangeur thermique,
- la figure 4 montre une représentation schématique en perspective d'un dispositif de protection selon un deuxième mode de réalisation,
- la figure 5 montre une représentation schématique en perspective du dispositif de protection de la figure 3 lors de sa mise en place sur un échangeur thermique,
- la figure 6 montre une représentation schématique en perspective d'un dispositif de protection selon un troisième mode de réalisation.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

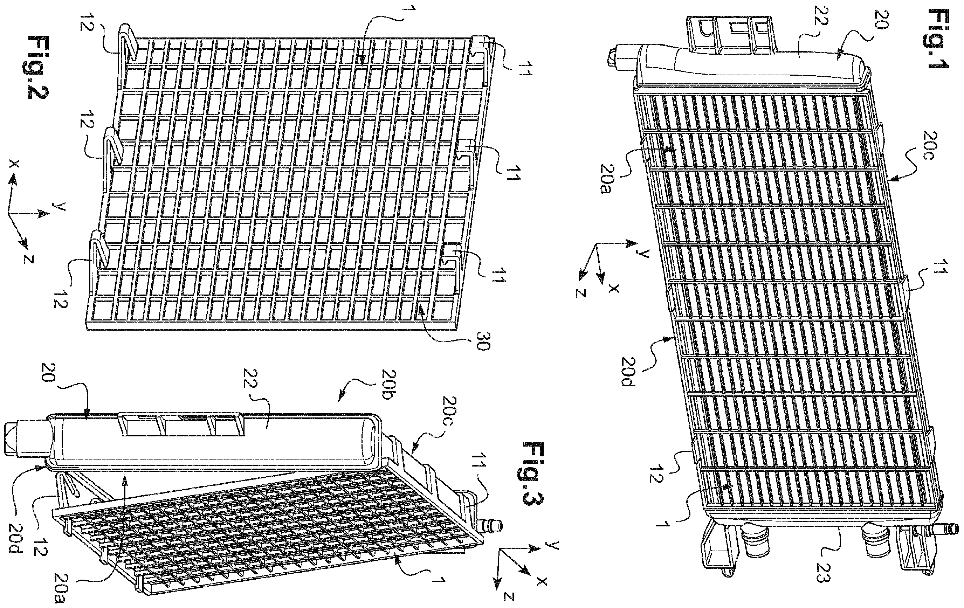

Les figures 1 à 6 montrent un dispositif de protection 1 pour échangeur thermique 20. L'échangeur thermique 20 comporte au moins une face avant 20a, une face arrière 20b en opposition l'une avec l'autre et une première 20c et une deuxième 20d faces latérales également en opposition l'une avec l'autre.

On entend par face avant 20a, la face de l'échangeur thermique 20 par laquelle un premier fluide caloporteur, par exemple un flux d'air, entre dans ledit échangeur thermique 20 afin de le traverser. Dans un véhicule automobile, cette face avant 20a est généralement celle dirigée vers l'avant dudit véhicule automobile et donc la plus sujette à subir des projections et des impacts. La face arrière 20b est par analogie, la face de l'échangeur thermique 20 opposée à la face avant 20a et donc celle par laquelle le premier fluide caloporteur ressort.

Par première face latérale 20c et deuxième face latérale 20d on entend plus particulièrement des faces situées sur des côtés opposés de l'échangeur thermique 20 et qui sont situées sur des plans de préférence perpendiculaires aux plans des faces avant 20a et arrière 20b.

L'échangeur thermique 20 peut par exemple être un échangeur à tube comportant des tubes plats, parallèles entre eux, dans lesquels circule le second fluide caloporteur. Entre ces tubes plats sont disposées des ailettes reliant deux tubes plats successifs. Le premier fluide caloporteur circule entre lesdits tubes plats en traversant lesdites ailettes.

Le dispositif de protection 1 est destiné à être placé en regard de la face avant 20a de l'échangeur thermique 20 et comporte une grille de protection 30.

La grille de protection 30 est composée de barres longitudinales parallèles les unes aux autres et comporte également des entretoises reliant lesdites barres longitudinales.

Lorsque l'échangeur thermique 20 comporte des tubes plats, les barres longitudinales 3 recouvrent de préférence les côtés desdits tubes plats afin de les protéger efficacement.

Le dispositif de protection 1 est de préférence réalisé en matière plastique et il est ajouré de sorte à permettre la circulation du premier fluide au travers de l'échangeur thermique 20.

Comme le montre les figures 1, 3 et 5, la grille de protection 30 est ici rectangulaire et comporte sur deux extrémités opposées, c'est-à-dire sur deux côtés opposés, des premiers moyens de maintien 11 et des deuxièmes moyens de maintien 12 chevauchant respectivement la première face latérale 20c et la deuxième face latérale 20d de l'échangeur thermique 20 et venant en prise avec la face arrière 20b dudit échangeur thermique 20.

L'échangeur thermique 20 a généralement une forme parallélépipédique et comporte donc d'autres faces latérales. L'échangeur thermique 20 comportent également des boîtes 20, 24 permettant l'alimentation et la circulation d'un second fluide caloporteur au sein dudit l'échangeur thermique 20. Comme illustré sur les figure 1, 3 et 5, les premières 20c et deuxième 20d faces latérales peuvent être les faces latérales qui ne portent pas les boîtes 22, 24. Il est néanmoins tout à fait possible d'imaginer un mode de réalisation particulier où les premiers moyens de maintien 11 et les deuxièmes moyens de maintien 12 chevauchent les boîtes 22, 24.

Les première face latérale 20c et deuxième face latérale 20d de l'échangeur thermique 20 sont ici les faces latérales supérieure, c'est-à-dire orientée vers le haut, et inférieure, c'est-à-dire orientée vers le bas. De ce fait, la gravité joue également dans le maintien du dispositif de protection 1 et cela limite les risques de déplacement par glissement dudit dispositif de protection 1 le long de l'échangeur thermique 20.

Selon un premier mode de réalisation illustré aux figures 2 et 3, les premiers moyens de maintien 11 comportent trois crochets de fixation venant en prise avec la face arrière 20b de l'échangeur thermique 20 ; les deuxièmes moyens de maintien 12 comportent trois pattes de fixation à emboîtage élastique contre la face arrière 20b de l'échangeur thermique 20.

La mise en place du dispositif de protection 1 selon ce premier mode de réalisation requiert donc deux étapes, une première étape d'accrochage du dispositif de protection 1 grâce aux crochets de fixation sur la première face latérale 20c et une seconde étape d'encliquetage des pattes de fixation à emboîtage élastique par simple poussée dudit dispositif de protection 1 contre l'échangeur thermique 20.

Selon une variante non représentée du mode de réalisation, le nombre de crochets ou de pattes de fixation est différent, par exemple quatre crochets et quatre pattes de fixation. Selon une autre variante, le nombre de crochet et le nombre de pattes sont différents, par exemple deux crochets et trois pattes de fixation.

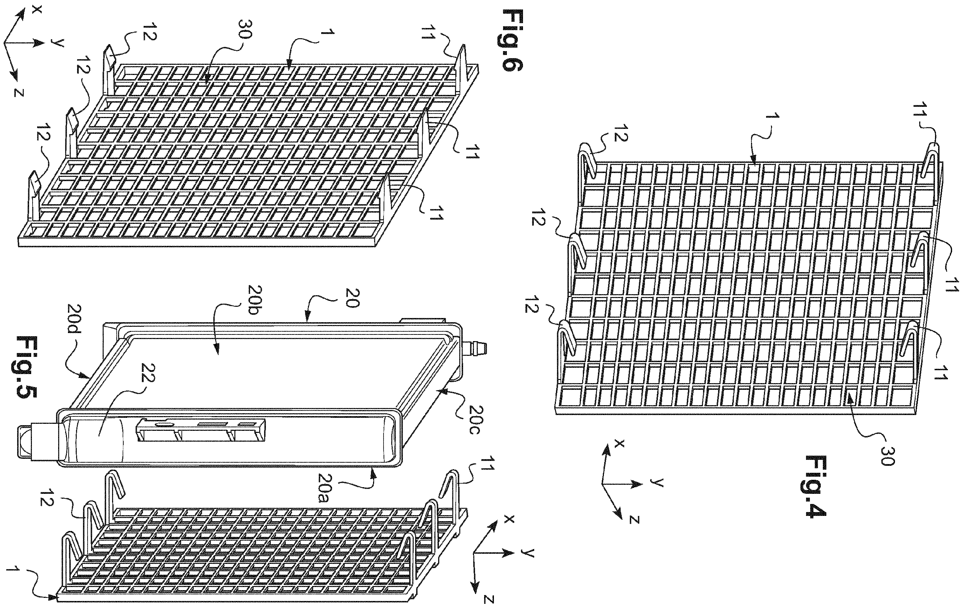

Selon un deuxième mode de réalisation illustré aux figures 4, 5 et 6, les premiers moyens de maintien 11 et les deuxièmes moyens de maintien 12 comportent tout deux trois pattes de fixation à emboîtage élastique contre la face arrière 20b de l'échangeur thermique 20.

Comme illustré sur les figures 2 à 5, la patte de fixation à emboîtage élastique comporte une lamelle flexible de forme générale en « J » comprenant deux branches de longueurs différentes et un coude reliant les deux branches. La branche la plus longue prend racine sur la grille de protection 30. La branche la plus courte forme une rampe pour l'encliquetage de la patte de fixation sur l'échangeur 20, l'extrémité libre de la branche la plus courte étant destinée à venir au contact de la face arrière 20b de l'échangeur thermique 20. La distance séparant la grille 30 de l'extrémité libre de la branche la plus courte correspond à l'épaisseur de l'échangeur 20. L'épaisseur de l'échangeur 20 correspond à la largeur des faces latérales 2c, 2d.

Selon un mode de réalisation alternatif illustré sur la figure 6, la patte de fixation à emboîtage élastique comporte une lamelle flexible fixée à une de ses extrémités au dispositif de protection et comportant à son autre extrémité une tête en biseau formant rampe destinée à venir au contact de la face arrière 20b de l'échangeur thermique 20. La patte de fixation présente en effet un décrochement entre la tête en biseau et la lamelle flexible. La lamelle flexible a une longueur entre la grille 30 et la tête en biseau correspond à l'épaisseur de l'échangeur 20.

Dans les deux cas, lors du montage, les pattes de fixation se déforment grâce au mouvement du dispositif 1 vers la face 20a de l'échangeur 20. Les pattes glissent sur les faces latérales 20c, 20d jusqu'à ce que, pour chaque patte, la branche la plus courte de la patte ou la tête en biseau soit passée de l'autre côté de la face latérales 20c, 20d de sorte que les faces 20c, 20d se trouvent prises en sandwich entre la grille 30 et les branches les plus courtes des pattes ou les têtes en biseau.

La mise en place du dispositif de protection 1 selon ce deuxième mode de réalisation ne comporte alors qu'une seule étape de fixation par encliquetage des pattes de fixation à emboîtage élastique par simple poussée dudit dispositif de protection 1 contre l'échangeur thermique 20.

Dans le mode de réalisation de la figure 3, on notera que les crochets n'étant pas élastiques, on positionne les crochets à cheval de la face latérale puis on réalise le mouvement d'encliquetage des pattes de fixation sur la face latérale opposée de la même façon qu'exposée pour les autres modes réalisation.

Quel que soit le mode de réalisation, les premiers moyens de maintien 11 et deuxièmes moyens de maintien 12 permettent une fixation rapide du dispositif de protection 1 sur la face avant 20a de l'échangeur thermique 20 sans qu'il soit nécessaire d'équiper ledit échangeur thermique 20 avec des éléments particuliers pour la fixation.

La grille de protection du dispositif de protection 1 comprend selon l'invention des éléments séparateurs (non illustrés).

Ces éléments séparateurs sont destinés à venir en contact de la face avant 20a de l'échangeur thermique 20, et sont maintenus au contact de ladite face avant 20a grâce aux premier 11 et deuxième 12 moyens de maintien.

Ces éléments séparateurs font alors entretoise entre la grille de protection et la face avant 20a de l'échangeur thermique 20. Le fait que la grille soit éloignée de la face avant 20a de l'échangeur thermique 20 permet qu'en cas de vibrations, ladite grille ne vienne pas cogner contre ladite face avant 20a et donc ne génère des bruits et/ou ne puisse détériorer l'échangeur thermique 20.

Un tel élément séparateur peut par exemple être un cadre entourant la grille de protection, ladite grille de protection étant positionnée en retrait à l'intérieur dudit cadre.

Ainsi, on voit bien que le dispositif de protection 1 de part ces moyens de fixation permet une fixation rapide et ne nécessitant pas d'élément particulier au sein de l'échangeur thermique 20 pour se fixer sur ce dernier.

## Revendications

1. Dispositif de protection (1) pour échangeur thermique (20), ledit échangeur thermique (20) comportant au moins une face avant (20a) et une face arrière (20b) en opposition l'une avec l'autre, ainsi qu'une première face latérale (20c) et une deuxième face latérale (20d) en opposition l'une avec l'autre, ledit dispositif de protection (1) comportant une grille de protection et étant destiné à être placé en regard de la face avant (20a) dudit échangeur thermique (20), la grille de protection comportant sur deux extrémités opposées respectivement des premiers moyens de maintien (11) et des deuxièmes moyens de maintien (12) adaptés à chevaucher respectivement la première face latérale (20c) et la deuxième face latérale (20d) de l'échangeur thermique (20) et à venir en prise avec la face arrière (20b) dudit échangeur thermique (20), le dispositif de protection étant **caractérisé en ce qu'**il comporte en outre des éléments séparateurs destinés à être placés entre la grille de protection et la face avant (20a) de l'échangeur thermique (20).

2. Dispositif de protection (1) selon la revendication précédente, **caractérisé en ce qu'**au moins les premiers moyens de maintien (11) ou les deuxièmes moyens de maintien (12) comportent au moins un crochet de fixation destinés à venir en prise avec la face arrière (20b) de l'échangeur thermique (20).

3. Dispositif de protection (1) selon l'une des revendications précédentes, **caractérisé en ce qu'**au moins les premiers moyens de maintien (11) ou les deuxièmes moyens de maintien (12) comportent au moins une patte de fixation à emboîtage élastique contre la face arrière (20b) de l'échangeur thermique (20).

4. Dispositif de protection (1) selon la revendication 3, **caractérisé en ce que** la patte de fixation à emboîtage élastique comporte une lamelle flexible prenant racine sur la grille de protection et comportant à son extrémité libre une tête en biseau destinée à venir en prise avec la face arrière (20b) de l'échangeur thermique (20).

5. Dispositif de protection (1) selon la revendication 3, **caractérisé en ce que** la patte de fixation à emboîtage élastique comporte une lamelle flexible de forme générale en « J » comprenant deux branches de longueurs différentes reliées par un coude, la branche la plus longue prenant racine sur la grille de protection et l'extrémité libre de la branche la plus courte étant destinée à venir au contact de la face arrière (20b) de l'échangeur thermique (20).

6. Dispositif de protection (1) selon l'une des revendications 3 à 5, **caractérisé en ce que** les premiers moyens de maintien (11) et les deuxièmes moyens de maintien (12) comportent tout deux au moins une patte de fixation à emboîtage élastique contre la face arrière (20b) de l'échangeur thermique (20).

7. Dispositif de protection (1) selon l'une des revendications précédentes, **caractérisé en ce qu'**il est réalisé en matière plastique.

8. Ensemble d'échange de chaleur comportant un échangeur thermique (20) et un dispositif de protection (1) selon l'une des revendications précédentes et placé sur ledit échangeur (20).

## Patentansprüche

1. Schutzvorrichtung (1) für einen Wärmetauscher (20), wobei der Wärmetauscher (20) mindestens eine Vorderseite (20a) und eine Rückseite (20b), die zueinander entgegengesetzt sind, sowie eine erste Seitenfläche (20c) und eine zweite Seitenfläche (20d), die zueinander entgegengesetzt sind, umfasst, wobei die Schutzvorrichtung (1) ein Schutzgitter umfasst und dazu ausgestaltet ist, gegenüber der Vorderseite (20a) des Wärmetauschers (20) angeordnet zu werden, wobei das Schutzgitter an zwei entgegengesetzten Enden erste Halteeinrichtungen (11) bzw. zweite Halteeinrichtungen (12) umfasst, die geeignet sind, die erste Seitenfläche (20c) beziehungsweise die zweite Seitenfläche (20d) des Wärmetauschers (20) zu übergreifen und mit der Rückseite (20b) des Wärmetauschers (20) in Eingriff zu gelangen, wobei die Schutzvorrichtung **dadurch gekennzeichnet ist, dass** sie ferner Trennelemente umfasst, die dazu ausgestaltet sind, zwischen dem Schutzgitter und der Vorderseite (20a) des Wärmetauschers (20) angeordnet zu werden.

2. Schutzvorrichtung (1) nach dem vorhergehenden Anspruch, **dadurch gekennzeichnet, dass** mindestens die ersten Halteeinrichtungen (11) oder die zweiten Halteeinrichtungen (12) mindestens einen Fixierungshaken umfassen, die dazu ausgestaltet sind, mit der Rückseite (20b) des Wärmetauschers (20) in Eingriff zu gelangen.

3. Schutzvorrichtung (1) nach einem der vorhergehenden Ansprüche, **dadurch gekennzeichnet, dass** mindestens die ersten Halteeinrichtungen (11) oder die zweiten Halteeinrichtungen (12) mindestens eine Fixierungslasche zur Schnappverbindung an der Rückseite (20b) des Wärmetauschers (20) umfassen.

4. Schutzvorrichtung (1) nach Anspruch 3, **dadurch gekennzeichnet, dass** die Fixierungslasche zur Schnappbefestigung eine flexible Lamelle umfasst, die ihren Ursprung am Schutzgitter hat und an ihrem freien Ende einen abgeschrägten Kopf umfasst, der dazu ausgestaltet ist, mit der Rückseite (20b) des Wärmetauschers (20) in Eingriff zu gelangen.

5. Schutzvorrichtung (1) nach Anspruch 3, **dadurch gekennzeichnet, dass** die Fixierungslasche zur Schnappverbindung eine flexible Lamelle mit der Grundform eines "J" umfasst, die zwei unterschiedlich lange, über einen Bogen verbundene Schenkel aufweist, wobei der längere Schenkel seinen Ursprung am Schutzgitter hat und das freie Ende des kürzeren Schenkels dazu ausgestaltet ist, mit der Rückseite (20b) des Wärmetauschers (20) in Kontakt zu gelangen.

6. Schutzvorrichtung (1) nach einem der Ansprüche 3 bis 5, **dadurch gekennzeichnet, dass** die ersten Halteeinrichtungen (11) und die zweiten Halteeinrichtungen (12) beide mindestens eine Fixierungslasche zur Schnappbefestigung an der Rückseite (20b) des Wärmetauschers (20) umfassen.

7. Schutzvorrichtung (1) nach einem der vorhergehenden Ansprüche, **dadurch gekennzeichnet, dass** sie aus Kunststoff ausgeführt ist.

8. Wärmetauscheranordnung mit einem Wärmetauscher (20) und einer Schutzvorrichtung (1) nach einem der vorhergehenden Ansprüche, die an dem Tauscher (20) angeordnet ist.

## Claims

1. Protective device (1) for a heat exchanger (20), said heat exchanger (20) comprising at least a front face (20a) and a rear face (20b) opposite one another, and a first lateral face (20c) and a second lateral face (20d) opposite one another, said protective device (1) comprising a protective grille and being intended to be placed facing the front face (20a) of said heat exchanger (20), the protective grille comprising, on its two opposite ends, respectively first holding means (11) and second holding means (12) that are designed to respectively overlap the first lateral face (20c) and the second lateral face (20d) of the heat exchanger (20) and to come into engagement with the rear face (20b) of said heat exchanger (20), the protective device being **characterized in that** it further comprises separating elements designed to be placed between the protective grille and the front face (20a) of the heat exchanger (20).

2. Protective device (1) according to the preceding claim, **characterized in that** at least the first holding means (11) or the second holding means (12) comprise at least one fixing hook designed to come into engagement with the rear face (20b) of the heat exchanger (20).

3. Protective device (1) according to the preceding claim, **characterized in that** at least the first holding means (11) or the second holding means (12) comprise at least one fixing tab for elastic assembly against the rear face (20b) of the heat exchanger (20) .

4. Protective device (1) according to Claim 3, **characterized in that** the elastic assembly fixing tab comprises a flexible leaf that is joined to the protective grille and comprising at its free end a bevelled head designed to come into engagement with the rear face (20b) of the heat exchanger (20).

5. Protective device (1) according to Claim 3, **characterized in that** the elastic assembly fixing tab comprises a flexible leaf in the general shape of a "J" comprising two branches of different lengths connected by an elbow, the longer branch being joined to the protective grille and the free end of the shorter branch being designed to come into contact with the rear face (20b) of the heat exchanger (20).

6. Protective device (1) according to one of Claims 3 to 5, **characterized in that** the first holding means (11) and the second holding means (12) both comprise at least one fixing tab for elastic assembly against the rear face (20b) of the heat exchanger (20).

7. Protective device (1) according to one of the preceding claims, **characterized in that** it is made of plastic material.

8. Heat exchange assembly comprising a heat exchanger (20) and a protective device (1) according to one of the preceding claims and placed on said exchanger (20) .
